# EUROPÄISCHE PATENTSCHRIFT

(11) **EP 3 253 677 B1**
(45) Veröffentlichungstag und Bekanntmachung des Hinweises auf die Patenterteilung: **01.04.2020**
(21) Anmeldenummer: 16705046.7
(22) Anmeldetag: 01.02.2016
(51) Int. Cl.: B65D 77/22, B60K 15/035, F01N 3/20, B60K 15/03, F16K 15/14, F16K 27/12, F02M 59/46, F02C 7/232

(54) **LEITUNGSABSCHLUSSELEMENT FÜR EINEN VENTILATIONSABGANG EINES FLUIDBEHÄLTERS SOWIE FLUIDBEHÄLTER**
LINE TERMINATION ELEMENT FOR A VENTILATION OUTLET OF A FLUID CONTAINER, AND FLUID CONTAINER
ÉLÉMENT DE TERMINAISON DE LIGNE POUR UNE SORTIE DE VENTILATION D'UN RÉSERVOIR À FLUIDE AINSI QUE RÉSERVOIR À FLUIDE

(30) Priorität: 02.02.2015 DE 102015201772
(43) Veröffentlichungstag der Anmeldung: 13.12.2017
(73) Patentinhaber: Kautex Textron GmbH & Co. KG, 53229 Bonn (DE)
(72) Erfinder: KOUKAN, Ibrahim, 50999 Köln (DE); SCHUMACHER, Nicolai, 53227 Bonn (DE)
(74) Vertreter: Richly & Ritschel Patentanwälte PartG mbB
(86) Internationale Anmeldenummer: PCT/EP2016/052089
(87) Internationale Veröffentlichungsnummer: WO 2016/124551

(56) Entgegenhaltungen:
- EP-A1- 2 783 943
- DE-A1-102014 201 780
- DE-C- 824 578
- GB-A- 2 314 789
- US-A- 5 129 426
- US-A- 5 419 366
- US-A1- 2011 083 771

## Beschreibung

Die Erfindung betrifft ein Leitungsabschlusselement für einen Ventilationsabgang eines Fluidbehälters mit einem Grundkörper, der als Verschlusselement für ein freies Ende des Ventilationsabgangs ausgebildet ist und der querschnittlich an den Querschnitt des Ventilationsabgangs angepasst ist, umfassend wenigstens einen Ventilkörper (10), der in einer ersten Lage den Mündungsquerschnitt (17) des Ventilationsabgangs verschließt und der in einer zweiten Lage den Mündungsquerschnitt (17) des Ventilationsabgangs freigibt. Ferner betrifft die Erfindung einen Fluidbehälter.

Ein entsprechendes Leitungsabschlusselement ist beispielsweise aus der US 5 129 426 A bekannt.

Ein Fluidbehälter im Sinne der vorliegenden Erfindung kann beispielsweise ein in einem Kraftfahrzeug angeordneter Kraftstoffbehälter, ein Behälter zur Aufnahme von Scheibenreinigungsflüssigkeit, ein Behälter zur Aufnahme eines flüssigen Additivs zur Abgasentstickung oder dergleichen sein.

Ein Ventilationsabgang im Sinne der vorliegenden Erfindung kann beispielsweise eine Belüftungsleitung oder auch eine Entlüftungsleitung oder ein Anschlussstutzen oder ein Anschlussnippel eines Fluidbehälters sein.

Es ist grundsätzlich bekannt, Öffnungen und Ventile an solchen Behältern mit Sieben, Insektengittern oder anderen Barrieren zu versehen, die zuverlässig ein Eindringen von Insekten oder anderen Verschmutzungen in das Volumen des Behälters verhindern. Häufig sind hierzu an bekannten Fluidbehältern Ventile vorgesehen, die ein Ventilgehäuse, einen in dem Ventilgehäuse angeordneten Ventilkörper sowie gegebenenfalls eine Membrane und ein Insektengitter aufweisen. Das Ventil verhindert ein Austreten von Flüssigkeit aus dem Behälter bei einer über Kopf Lage des Behälters oder gewährleistet einen Druckausgleich zwischen dem Volumen des Behälters und der Umgebung. Bei einigen Anwendungen verhindert das Ventil zugleich ein Austrocknen des Fluidbehälters.

Die zuvor beschriebenen Ventile an einem Fluidbehälter müssen in entsprechende Öffnungen des Fluidbehälters eingesetzt werden. Je nach Anzahl der von dem Ventil zu gewährleistenden Funktionen fällt die Größe des Ventilgehäuses aus. In der Wand des Fluidbehälters müssen entsprechend große Öffnungen vorgesehen werden, was bei einstückig ausgebildeten Fluidbehältern aus thermoplastischem Kunststoff nicht unbedingt wünschenswert ist. Unter Umständen gelangen bewegliche Teile der Ventile mit der Flüssigkeit innerhalb des Fluidbehälters in Kontakt, was ebenfalls je nach Inhalt des Fluidbehälters nicht wünschenswert ist. Darüber hinaus ist die Herstellung von Ventilen, die eine Vielzahl von Funktionen gewährleisten müssen, verhältnismäßig aufwendig.

Der Erfindung liegt daher die Aufgabe zugrunde, eine möglichst einfache Anordnung bereitzustellen, mit welcher eine Ventilfunktion an einen Fluidbehälter gewährleistet werden kann und die verhältnismäßig einfach nachrüstbar ist. Der Erfindung liegt weiterhin die Aufgabe zugrunde, eine verhältnismäßig einfach nachrüstbare Anordnung bereitzustellen, die die Funktion eine Insektenschutzbarriere erfüllt. Die Anordnung soll insbesondere einfach und kostengünstig herstellbar sein.

Die der Erfindung zugrundeliegende Aufgabe wird durch ein Leitungsabschlusselement mit den Merkmalen des Anspruchs 1 gelöst. Vorteilhafte Ausgestaltungen der Erfindung ergeben sich aus den Unteransprüchen.

Nach einem Gesichtspunkt der Erfindung ist ein Leitungsabschlusselement für einen Ventilationsabgang eines Fluidbehälters vorgesehen, mit einem Grundkörper, der als Verschlusselement für ein freies Ende des Ventilationsabgangs ausgebildet ist und der querschnittlich an den Querschnitt des Ventilationsabgangs angepasst ist, umfassend wenigstens einen Strömungsdurchlass als Insektenbarriere, der kleiner ist als ein Mündungsquerschnitt des Ventilationsabgangs, sowie weiterhin umfassend einen Ventilkörper, der in einer ersten Lage den Mündungsquerschnitt des Ventilationsabgangs verschließt und der in einer zweiten Lage den Mündungsquerschnitt des Ventilationsabgangs freigibt.

Die Anordnung gemäß der Erfindung bzw. das Leitungsabschlusselement gemäß der Erfindung integriert die Funktion "Spinnensieb" und die Funktion eines Ventils in einem verhältnismäßig kompakten Bauteil, welches verhältnismäßig einfach nachrüstbar ist.

Insbesondere an einem Fluidbehälter aus thermoplastischem Kunststoff, der zur Aufnahme eines Additivs zur Abgasentstickung vorgesehen ist, wird gewährleistet, dass der Fluidbehälter nicht austrocknet. Insbesondere wenn der Fluidbehälter eine wässrige Harnstofflösung aufnimmt, stellt das Austrocknen des Behälters ein Problem dar. Die Harnstofflösung neigt dazu, große Kristalle zu bilden die den Ventilationsabgang und die Ventile zuzusetzen bzw. verstopfen. Aus diesem Grund ist es besonders vorteilhaft, wenn Ventile oder andere bewegliche Teile nicht unmittelbar in Kontakt mit der in dem Fluidbehälter aufgenommen Flüssigkeit gelangen.

Gemäß der Erfindung ist es daher besonders vorteilhaft, wenn die Ventilfunktion sowie die Funktion eines Spinnensiebes in ein Leitungsabschlusselement integriert sind, welches mit Abstand zu dem Behältervolumen oder zu der Behälterwand angeordnet werden kann und welches verhältnismäßig einfach auf das freie Ende eines Ventilationsabgangs aufgesteckt werden kann. Ein solches Leitungsabschlusselement benötigt keine separaten Befestigungsmittel, da es ohne weitere Befestigungsmittel kraftschlüssig auf ein freies Ende eines Ventilationsabgangs aufgesteckt oder aufgeklemmt oder formschlüssig mit dem freien Ende des Ventilationsabgangs verrastet werden kann.

Bei einer bevorzugten Variante des Leitungsabschlusselements nach der Erfindung ist vorgesehen, dass der Grundkörper als Verschlusskappe für das freie Ende des Ventilationsabgangs ausgebildet ist.

Beispielsweise kann vorgesehen sein, dass der Grundkörper einen Aufnahmeraum für das freie Ende des Ventilationsabgangs und eine Ventilationskammer umschließt. Die Ventilationskammer ist vorzugsweise an dem von dem Aufnahmeraum entfernt liegenden Ende oder in dem von dem Aufnahmeraum abliegend angeordneten Teil des Grundkörpers vorgesehen.

Bei einer bevorzugten Variante des Leitungsabschlusselements gemäß der Erfindung ist vorgesehen, dass der Ventilkörper den Aufnahmeraum für das freie Ende des Ventilationsabgangs begrenzt. Der Ventilkörper kann beispielsweise als innere Unterteilung des Grundkörpers ausgebildet sein. Wenn der Ventilkörper etwa scheibenförmig ausgebildet ist, bildet dieser eine Trennwand zwischen dem Aufnahmeraum und der Ventilationskammer.

Der Ventilkörper kann die Ventilationskammer in Richtung auf den Aufnahmeraum für das freie Ende des Ventilationsabgangs begrenzen.

Bei einer vorteilhaften Variante des Leitungsabschlusselements gemäß der Erfindung ist vorgesehen, dass der Grundkörper eine Vielzahl von Strömungsdurchlässen als Insektenbarriere aufweist, die vorzugsweise als umfänglich zumindest teilweise umlaufende Schlitze ausgebildet sind.

Bevorzugt ist der Ventilkörper als Pilzventil mit einem flexiblen Ventilschirm und einem Schaft ausgebildet, wobei der Ventilschirm in der ersten Lage den Mündungsquerschnitt des Ventilationsabgangs verdeckt. In der geschlossenen Stellung des Pilzventils kann der Ventilschirm auf dem Mündungsquerschnitt des Ventilationsabgangs aufliegen. Beispielsweise kann ein Überdruck innerhalb des Fluidbehälters ein Abheben des Ventilschirms bewirken. Der Ventilkörper kann allerdings auch so eingebaut sein, dass ein Unterdruck innerhalb des Fluidbehälters ein Öffnen des Ventils bewirkt. In dem Ventilkörper kann ein Schlitz oder eine Bohrung vorgesehen sein, die permanent einen Druckausgleich zwischen dem Inneren des Fluidbehälters und der Atmosphäre herstellt, wobei in der ersten Lage des Ventilkörpers ein verzögerter Druckausgleich mit der Atmosphäre bewirkt wird.

Bevorzugt sind der Ventilschirm und der Schaft einstückig ausgebildet. Der Schaft des Ventilkörpers kann beispielsweise als Zapfen ausgebildet sein, welcher ein solches Profil aufweist, dass er vermöge der Elastizität seines Materials unverlierbar in eine entsprechend dimensionierte Öffnung einsteckbar ist.

Bei einer vorteilhaften Variante des Leitungsabschlusselements gemäß der Erfindung ist vorgesehen, dass der Aufnahmeraum für das freie Ende des Ventilationsabgangs Umfassungswände aufweist, die in den Aufnahmeraum hervorstehende Rastvorsprünge oder Rastvertiefungen aufweisen, die mit entsprechenden Rastvertiefungen des Ventilationsabgangs zusammenwirken.

Eine weitere vorteilhafte Variante des Leitungsabschlusselements gemäß der Erfindung zeichnet sich dadurch aus, dass der Schaft des Ventilkörpers eine stirnseitige Öffnung des Grundkörpers durchsetzt.

Beispielsweise kann der Grundkörper eine stirnseitige, als Sackloch ausgebildete Vertiefung aufweisen, welche einen Boden aufweist, in welchem die Öffnung zur Aufnahme des Schafts des Ventilkörpers vorgesehen ist.

Der Grundkörper des Leitungsabschlusselements ist vorzugsweise aus thermoplastischem Kunststoff ausgebildet. Dieser kann als einstückiges, spritzgegossenes Bauteil ausgebildet sein.

Der thermoplastische Kunststoff des Grundkörpers kann beispielsweise ausgewählt sein aus einer Gruppe umfassend ABS, POM, Polyethylen, Polypropylen oder Polyamid.

Der Ventilkörper kann beispielsweise aus einem thermoplastischen Elastomer, einem Kautschuk oder aus einem anderen elastischen Werkstoff bestehen.

Die der Erfindung zugrundeliegende Aufgabe wird weiterhin durch einen Fluidbehälter mit den Merkmalen des Anspruchs 12 gelöst. Weitere vorteilhafte Merkmale der Erfindung ergeben sich aus den Unteransprüchen.

Nach einem weiteren Gesichtspunkt der Erfindung ist ein Fluidbehälter aus thermoplastischem Kunststoff vorgesehen, mit wenigstens einem Ventilationsabgang, umfassend ein Leitungsabschlusselement mit einem Grundkörper, der als Verschlusselement für ein freies Ende des Ventilationsabgangs ausgebildet ist und der querschnittlich an den Querschnitt des Ventilationsabgangs angepasst ist, umfassend wenigstens einen Strömungsdurchlass als Insektenbarriere, wobei der Strömungsdurchlass kleiner als ein Mündungsquerschnitt des Ventilationsabgangs ist, sowie wenigstens einen Ventilkörper, der in einer ersten Lage den Mündungsquerschnitt des Ventilationsabgangs verschließt und der in einer zweiten Lage den Mündungsquerschnitt des Ventilationsabgangs freigibt.

Der Fluidbehälter kann beispielsweise aus Polyethylen, Polypropylen oder Polyamid bestehen.

Der Fluidbehälter kann als extrusionsblasgeformter Behälter, als spritzgegossener Behälter oder als rotationsgesinterter Behälter ausgebildet sein.

Der Grundkörper ist vorzugsweise als Verschlusskappe oder Verschlussstopfen für das freie Ende des Ventilationsabgangs ausgebildet und lösbar mit dem freien Ende des Ventilationsabgangs verbunden.

Das freie Ende des Ventilationsabgangs kann ein Einsteckprofil aufweisen, wobei das Einsteckprofil in einen Aufnahmeraum des Grundkörpers lösbar eingesteckt ist.

Bei einer besonders bevorzugten Variante des erfindungsgemäßen Fluidbehälters ist vorgesehen, dass das Einsteckprofil formschlüssig mit komplementär dazu ausgebildeten Rastmitteln des Leitungsabschlusselements zusammenwirkt.

Das Einsteckprofil kann beispielsweise in Form eines sogenannten Tannenbaumprofils ausgebildet sein.

Grundsätzlich kann das freie Ende des Ventilationsabgangs außen glattwandig ausgebildet sein. Darüber hinaus können auch die Umfassungswände des Aufnahmeraums für das freie Ende des Ventilationsabgangs glattwandig ausgebildet sein. In diesem Fall ist es vorteilhaft, wenn der Durchmesser des Aufnahmeraums auf das freie Ende des Ventilationsabgangs so angepasst ist, dass der Ventilationsabgang kraftschlüssig in dem Aufnahmeraum gehalten wird.

Die Erfindung wird nachstehend anhand eines in den Zeichnungen dargestellten Ausführungsbeispiels erläutert.

Es zeigen:
- Figur 1: eine Ventilationsleitung an einem Fluidbehälter, wobei der Fluidbehälter selbst in der Figur nicht dargestellt ist,
- Figur 2: eine perspektivische Ansicht des Leitungsabschlusselements gemäß der Erfindung,
- Figur 3: ein Anschlussgehäuse an einem Fluidbehälter gemäß der Erfindung mit einem Ventilationsabgang, auf welche ein Leitungsabschlusselement gemäß der Erfindung aufgesetzt ist,
- Figur 4: eine Schnittansicht (Teilschnitt) eines Leitungsabschlusselements gemäß der Erfindung mit einem eingesteckten Ende eines Ventilationsabgangs,
- Figur 5: eine Schnittansicht eines Leitungsabschlusselements gemäß der Erfindung mit einem eingesteckten Ende eines Ventilationsabgangs, wobei der Ventilationsabgang ein Tannenbaumprofil aufweist,
- Figur 6: eine perspektivische Schnittansicht durch das Leitungsabschlusselement gemäß der Erfindung,
- Figur 7: eine perspektivische Schnittansicht durch das Leitungsabschlusselement gemäß der Erfindung mit eingestecktem Ventilationsabgang und
- Figur 8: eine perspektivische stirnseitige Ansicht des Leitungsabschlusselements.

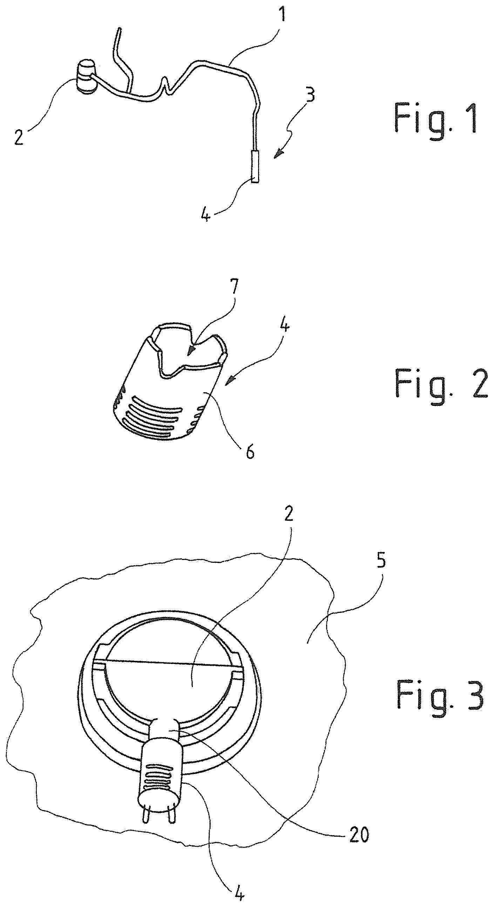

Es wird zunächst Bezug genommen auf Figur 1, die als Ventilationsabgang eine Ventilationsleitung 1 eines in Figur 1 aus Vereinfachungsgründen nicht dargestellten Fluidbehälters zeigt. Der Fluidbehälter ist beispielsweise als Harnstoffbehälter für die selektive katalytische Abgasentstickung ausgebildet. An den Fluidbehälter ist die Ventilationsleitung über ein Anschlussgehäuse 2 angeschlossen.

In dem Anschlussgehäuse 2 kann beispielsweise eine Membrane angeordnet sein, die gasdurchlässig und flüssigkeitsundurchlässig ist. Der Ventilationsabgang kann beispielsweise mit einem Ende in ein Radgehäuse eines PKW geführt sein. Um ein Eindringen von Schmutz und von Insekten in den Ventilationsabgang zu verhindern, ist auf deren freies Ende 3 ein Leitungsabschlusselement 4 gemäß der Erfindung aufgesteckt.

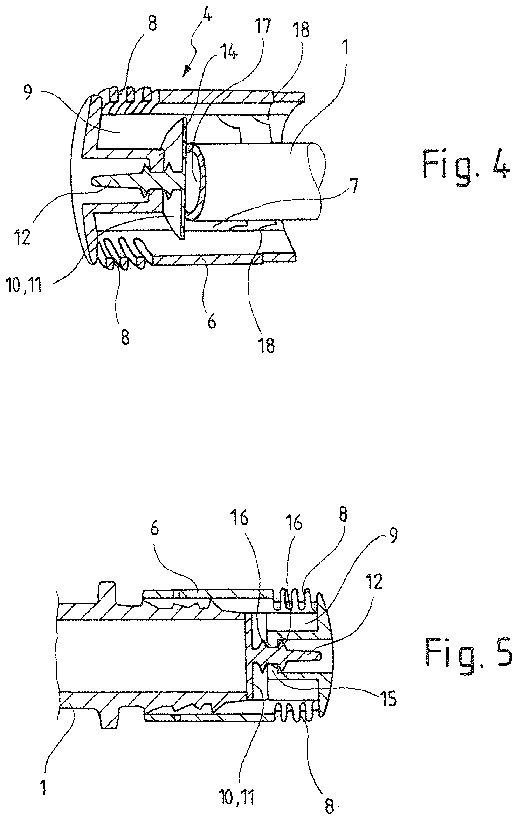

Eine andere Variante eines Ventilationsabgangs an einem Fluidbehälter 5 ist in Figur 3 dargestellt. In Figur 5 ist nur eine in Einbaulage obere Behälterwand des Fluidbehälters 5 teilweise dargestellt. In die obere Behälterwand des Fluidbehälters 5 ist ein Anschlussgehäuse 2 eingesetzt, welches als Ventilationsabgang einen Leitungsstutzen 20 aufweist, auf welchen das Leitungsabschlusselement 4 gemäß der Erfindung aufgesteckt ist.

Das in den Figuren 2 und 4-8 dargestellte Leitungsabschlusselement 4 ist als Verschlusskappe mit einem etwa zylindrischen Grundkörper 6 ausgebildet. Der Grundkörper umschließt einen zylindrischen Aufnahmeraum 7 für das freie Ende 3 des Ventilationsabgangs.

Figur 2 zeigt eine perspektivische Ansicht des Leitungsabschlusselements 4 ohne den in dieses eingesteckten Ventilationsabgang.

Wie dies im Wesentlichen allen Figuren zu entnehmen ist, ist der Grundkörper 6 an seinem Umfang mit einer Vielzahl von teilweise umlaufenden Schlitzen 8 versehen, die jeweils einen Strömungsdurchlass als Insektenbarriere im Sinne der Erfindung bilden. Anstelle von Schlitzen können selbstverständlich auch kleine Löcher oder kleine anders gestaltete Durchbrüche vorgesehen sein.

Die Schlitze 8 münden in eine Ventilationskammer 9 des Leitungsabschlusselements 4, die von dem Aufnahmeraum 7 für das freie Ende 3 des Ventilationsabgangs durch einen Ventilkörper 10 getrennt ist. Der Ventilkörper 10 ist als sogenanntes Pilzventil mit einem Ventilschirm 11 und einem Schaft 12 ausgebildet. Der Ventilschirm 11 besitzt die Gestalt einer Scheibe. Der Ventilkörper 10 besteht aus einem flexiblen und elastischen Material, beispielsweise aus einem thermoplastischen Elastomer. Der Schaft 12 ist einstückig an den Ventilschirm 11 angeformt.

In der Stirnseite des Grundkörpers 6 ist eine Vertiefung in Form eines Sacklochs 13 vorgesehen, die einen Boden 14 aufweist. In dem Boden 14 ist eine Öffnung 15 vorgesehen, in welche der Schaft 12 des Ventilkörpers 10 eingesetzt ist. Der Schaft 12 ist konisch ausgebildet, wobei der Schaft 12 von dem Ventilschirm 11 bis zu einem abliegenden Ende spitz zulaufend ausgebildet ist. Der Schaft 12 ist darüber hinaus an seinem Umfang mit zwei umlaufenden Kragen 16 versehen, die den Schaft 12 in der Öffnung 15 festhalten. Aufgrund dieser Konfiguration des Schafts 12 kann der Ventilkörper 10 in die Öffnung 15 unter Aufwendung von Verformungskräften eingedrückt worden sein.

Aufgrund der Gestaltung des Sacklochs 13 kann der Ventilkörper 10 so innerhalb des von dem Grundkörper 6 umschlossenen Volumens montiert werden, dass dieser die Ventilationskammer 9 gegenüber dem Aufnahmeraum 7 abgrenzt und bei in den Aufnahmeraum eingeschobenem freien Ende 3 des Ventilationsabgangs gegen einen Mündungsquerschnitt 17 des Ventilationsabgangs anliegt.

Bei der in den Figuren gezeigten Konfiguration des Pilzventils bzw. des Ventilkörpers 10 verschließt der Ventilkörper 10 die Mündungsöffnung 17 des Ventilationsabgangs, wenn innerhalb des Fluidbehälters 5 kein Überdruck herrscht.

Bei der Montage das Leitungsabschlusselement 4 auf dem Ventilationsabgang kann der Ventilationsabgang bzw. dessen freies Ende 3 so tief in den Aufnahmeraum 7 eingeschoben werden, dass die Stirnseite bzw. der Mündungsquerschnitt 17 des Ventilationsabgangs gegen den Ventilschirm 11 anliegt.

Bei der in Figur 4 dargestellten Variante des Leitungsabschlusselements 4 sind die inneren Umfassungswände des Aufnahmeraums 7 mit Rippen 18 versehen, die in den Aufnahmeraum 7 hervorstehen und eine Verengung des Querschnitts des Aufnahmeraums 7 bewirken. Besitzt der Ventilationsabgang eine entsprechende Flexibilität, so wird diese in dem Aufnahmeraum 7 eingeklemmt, wie dies in Figur 4 dargestellt ist. Eine alternative Variante der Befestigung des Leitungsabschlusselements 4 ist in Figur 5 dargestellt. Die Umfassungswände des Aufnahmeraums 7 sind innenseitig glattwandig ausgebildet, der Ventilationsabgang ist hingegen mit einem Einsteckprofil versehen, dass bei der in Figur 5 dargestellten Variante als Tannenbaumprofil ausgebildet ist.

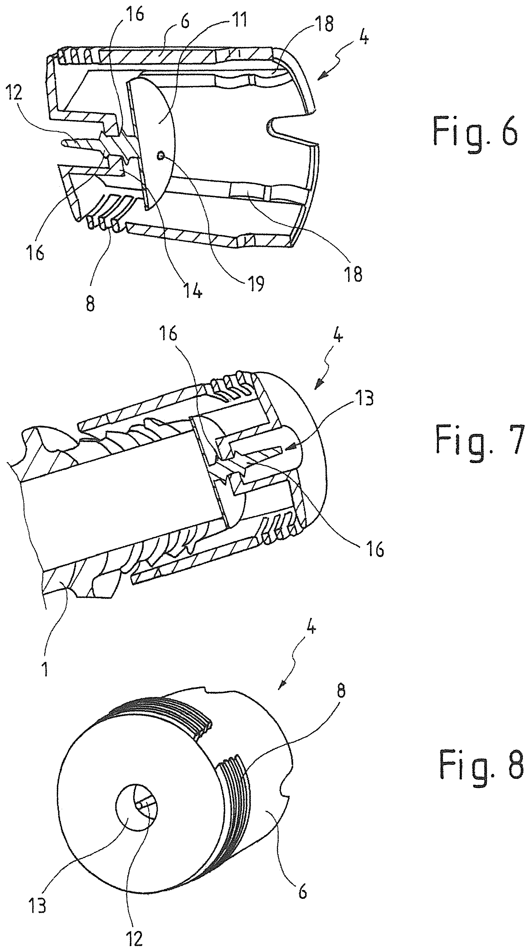

Eine perspektivische Ansicht des Leitungsabschlusselements 4 mit innen umlaufenden Rippen 18 ist in Figur 6 ohne das eingesteckte freie Ende 3 des Ventilationsabgangs dargestellt.

Figur 7 zeigt eine perspektivische Darstellung (Schnittansicht) des Leitungsabschlusselements 4 gemäß Figur 5.

Figur 8 zeigt eine Stirnansicht des Leitungsabschlusselements 4, die einen Einblick in das Sackloch 13 gewährt. Wie aus Figur 8 ersichtlich ist, ist der in die Öffnung 15 eingesetzte Schaft 12 von außen sichtbar. Diese Konfiguration des Leitungsabschlusselements 4 ermöglicht eine visuelle Kontrolle der Integrität des Pilzventils.

### Bezugszeichenliste

- 1: Ventilationsleitung
- 2: Anschlussgehäuse
- 3: freies Ende des Ventilationsabgangs
- 4: Leitungsabschlusselement
- 5: Fluidbehälter
- 6: Grundkörper
- 7: Aufnahmeraum
- 8: Schlitze
- 9: Ventilationskammer
- 10: Ventilkörper
- 11: Ventilschirm
- 12: Schaft
- 13: Sackloch
- 14: Boden
- 15: Öffnung
- 16: Kragen
- 17: Mündungsquerschnitt
- 18: Rippen
- 19: Bohrung
- 20: Leitungsstutzen

## Patentansprüche

1. Leitungsabschlusselement (4) für einen Ventilationsabgang eines Fluidbehälters (5) mit einem Grundkörper (6), der als Verschlusselement für ein freies Ende des Ventilationsabgangs (3) ausgebildet ist und der querschnittlich an den Querschnitt des Ventilationsabgangs angepasst ist, umfassend wenigstens einen Ventilkörper (10), der in einer ersten Lage den Mündungsquerschnitt (17) des Ventilationsabgangs verschließt und der in einer zweiten Lage den Mündungsquerschnitt (17) des Ventilationsabgangs freigibt,
**dadurch gekennzeichnet, dass** der Grundkörper (6) wenigstens einen Strömungsdurchlass als Insektenbarriere umfasst, der kleiner als ein Mündungsquerschnitt (17) des Ventilationsabgangs ist.

2. Leitungsabschlusselement (4) nach Anspruch 1, **dadurch gekennzeichnet, dass** der Grundkörper (6) als Verschlusskappe für das freie Ende des Ventilationsabgangs ausgebildet ist.

3. Leitungsabschlusselement (4) nach einem der Ansprüche 1 oder 2, **dadurch gekennzeichnet, dass** der Grundkörper (6) einen Aufnahmeraum (7) für das freie Ende des Ventilationsabgangs (3) und eine Ventilationskammer (9) umschließt.

4. Leitungsabschlusselement (4) nach Anspruch 3, **dadurch gekennzeichnet, dass** der Ventilkörper (10) den Aufnahmeraum (7) für das freie Ende des Ventilationsabgangs (3) begrenzt.

5. Leitungsabschlusselement (4) nach Anspruch 3 oder 4, **dadurch gekennzeichnet, dass** der Ventilkörper (10) die Ventilationskammer (9) in Richtung auf den Aufnahmeraum (7) für das freie Ende des Ventilationsabgangs (3) begrenzt.

6. Leitungsabschlusselement (4) nach einem der Ansprüche 1-5, **dadurch gekennzeichnet, dass** der Grundkörper (10) eine Vielzahl von Strömungsdurchlässen als Insektenbarriere aufweist, die als umfänglich zumindest teilweise umlaufende Schlitze (8) ausgebildet sind.

7. Leitungsabschlusselement (4) nach einem der Ansprüche 1-6, **dadurch gekennzeichnet, dass** der Ventilkörper (10) als Pilzventil mit einem flexiblen Ventilschirm (11) und einem Schaft (12) ausgebildet ist, wobei der Ventilschirm (11) in der ersten Lage den Mündungsquerschnitt (17) des Ventilationsabgangs verdeckt.

8. Leitungsabschlusselement (4) nach Anspruch 7, **dadurch gekennzeichnet, dass** der Ventilschirm (11) und der Schaft (12) einstückig ausgebildet sind.

9. Leitungsabschlusselement (4) nach einem der Ansprüche 5-8, **dadurch gekennzeichnet, dass** der Aufnahmeraum (7) für das freie Ende des Ventilationsabgangs (3) Umfassungswände aufweist, die in den Aufnahmeraum (7) hervorstehende Rastvertiefungen aufweisen, die mit entsprechenden Rastvertiefungen des Ventilationsabgangs zusammenwirken.

10. Leitungsabschlusselement (4) nach einem der Ansprüche 7-9, **dadurch gekennzeichnet, dass** der Schaft (12) des Ventilkörpers (10) eine stirnseitige Öffnung (15) des Grundkörpers (6) durchsetzt.

11. Leitungsabschlusselement (4) nach Anspruch 10, **dadurch gekennzeichnet, dass** der Grundkörper (6) eine äußere stirnseitige, als Sackloch (13) ausgebildete Vertiefung aufweist, welche einen Boden (14) aufweist, in welchem die Öffnung (15) zur Aufnahme des Schafts (12) des Ventilkörpers (10) vorgesehen ist.

12. Fluidbehälter (5) aus thermoplastischem Kunststoff mit wenigstens einem Ventilationsabgang, umfassend ein Leitungsabschlusselement (4), welches nach einem der Ansprüche 1 bis 11 ausgebildet ist.

13. Fluidbehälter (5) nach Anspruch 12, **dadurch gekennzeichnet, dass** der Grundkörper (6) als Verschlusskappe oder Verschlussstopfen für das freie Ende des Ventilationsabgangs (3) ausgebildet ist und lösbar mit dem freien Ende des Ventilationsabgangs verbunden ist.

14. Fluidbehälter (5) nach einem der Ansprüche 12-13, **dadurch gekennzeichnet, dass** das freie Ende des Ventilationsabgangs (3) ein Einsteckprofil aufweist und dass das Einsteckprofil in einen Aufnahmeraum (7) des Grundkörpers (6) lösbar eingesteckt ist.

15. Fluidbehälter (5) nach Anspruch 14, **dadurch gekennzeichnet, dass** das Einsteckprofil formschlüssig mit komplementär dazu ausgebildeten Mitteln des Leitungsabschlusselements (4) zusammenwirkt.

16. Fluidbehälter nach einem der Ansprüche 12-15 mit den Merkmalen eines der Ansprüche 1-11.

## Claims

1. A line termination element (4) for a ventilation outlet of a fluid container (5), having a main body (6) which is formed as a closure element for a free end of the ventilation outlet (3) and which is cross-sectionally matched to the cross section of the ventilation outlet, comprising at least one valve body (10), which, in a first position, closes off the mouth cross section (17) of the ventilation outlet and which, in a second position, opens up the mouth cross section (17) of the ventilation outlet,
**characterized in that**
the main body (6) comprises at least one flow passage as an insect barrier, which flow passage is smaller than a mouth cross section (17) of the ventilation outlet.

2. The line termination element (4) as claimed in claim 1, **characterized in that** the main body (6) is formed as a closure cap for the free end of the ventilation outlet.

3. The line termination element (4) as claimed in either of claims 1 and 2, **characterized in that** the main body (6) surrounds a receiving space (7) for the free end of the ventilation outlet (3) and a valve chamber (9).

4. The line termination element (4) as claimed in claim 3, **characterized in that** the valve body (10) delimits the receiving space (7) for the free end of the ventilation outlet (3).

5. The line termination element (4) as claimed in claim 3 or 4, **characterized in that** the valve body (10) delimits the valve chamber (9) in the direction of the receiving space (7) for the free end of the ventilation outlet (3).

6. The line termination element (4) as claimed in one of claims 1-5, **characterized in that** the main body (10) has, as insect barrier, a multiplicity of flow passages which are preferably formed as circumferentially at least partially encircling slots (8).

7. The line termination element (4) as claimed in one of claims 1-6, **characterized in that** the valve body (10) is formed as a mushroom valve having a flexible valve shield (11) and a shaft (12), wherein, in the first position, the valve shield (11) covers the mouth cross section (17) of the ventilation outlet.

8. The line termination element (4) as claimed in claim 7, **characterized in that** the valve shield (11) and the shaft (12) are formed integrally.

9. The line termination element (4) as claimed in one of claims 5-8, **characterized in that** the receiving space (7) for the free end of the ventilation outlet (3) has enclosure walls which have, projecting into the receiving space (7), locking depressions which interact with corresponding locking depressions of the ventilation outlet.

10. The line termination element (4) as claimed in one of claims 7-9, **characterized in that** the shaft (12) of the valve body (10) passes through an end-side opening (15) of the main body (6).

11. The line termination element (4) as claimed in claim 10, **characterized in that** the main body (6) has an external, end-side depression which is formed as a blind hole (13) and which has a base (14) in which the opening (15) for receiving the shaft (12) of the valve body (10) is provided.

12. A fluid container (5) composed of thermoplastic having at least one ventilation outlet, comprising a line termination element (4) which is designed as claimed in one of claims 1-11.

13. The fluid container (5) as claimed in claim 12, **characterized in that** the main body (6) is formed as a closure cap or closure plug for the free end of the ventilation outlet (3) and is removably connected to the free end of the ventilation outlet.

14. The fluid container (5) as claimed in either of claims 12 and 13, **characterized in that** the free end of the ventilation outlet (3) has an insertion profile, and **in that** the insertion profile is removably inserted into a receiving space (7) of the main body (6) .

15. The fluid container (5) as claimed in claim 14, **characterized in that** the insertion profile interacts in a form-fitting manner with means of the line termination element (4) that are formed in a complementary manner with respect thereto.

16. The fluid container as claimed in one of claims 12-15 having the features of one of claims 1-11.

## Revendications

1. Élément de terminaison de ligne (4) destiné à une sortie de ventilation d'un réservoir de fluide (5) et pourvu d'un corps de base (6) qui est conçu comme un élément de fermeture d'une extrémité libre de la sortie de ventilation (3) et qui est adapté en coupe transversal à la section transversale de la sortie de ventilation, l'élément de terminaison de ligne comprenant au moins un corps de soupape (10) qui ferme la section transversale d'embouchure (17) de la sortie de ventilation dans une première position et qui ouvre la section transversale d'ouverture (17) de la sortie de ventilation dans une deuxième position, **caractérisé en ce que** le corps de base (6) comprend au moins un passage d'écoulement qui sert de barrière contre les insectes et qui est plus petit de la section transversale d'embouchure (17) de la sortie de ventilation.

2. Élément de terminaison de ligne (4) selon la revendication 1, **caractérisé en ce que** le corps de base (6) est conçu comme un capuchon de fermeture de l'extrémité libre de la sortie de ventilation.

3. Élément de terminaison de ligne (4) selon l'une des revendications 1 ou 2, **caractérisé en ce que** le corps de base (6) renferme un espace de réception (7) destiné à l'extrémité libre de la sortie de ventilation (3) et une chambre de ventilation (9).

4. Élément de terminaison de ligne (4) selon la revendication 3, **caractérisé en ce que** le corps de soupape (10) délimite l'espace de réception (7) destiné à l'extrémité libre de la sortie de ventilation (3).

5. Élément de terminaison de ligne (4) selon la revendication 3 ou 4, **caractérisé en ce que** le corps de soupape (10) délimite la chambre de ventilation (9) en direction de l'espace de réception (7) destiné à l'extrémité libre de la sortie de ventilation (3).

6. Élément de terminaison de ligne (4) selon l'une des revendications 1 à 5, **caractérisé en ce que** le corps de base (10) comporte une pluralité de passages d'écoulement qui servent de barrière contre les insectes et qui sont conçus comme des fentes (8) s'étendent de manière au moins partiellement circonférentielle.

7. Élément de terminaison de ligne (4) selon l'une des revendications 1 à 6, **caractérisé en ce que** le corps de soupape (10) est conçu comme une soupape champignon comportant un écran de soupape flexible (11) et une tige (12), l'écran de soupape (11) recouvrant dans la première position la section transversale d'embouchure (17) de la sortie de ventilation.

8. Élément de terminaison de ligne (4) selon la revendication 7, **caractérisé en ce que** l'écran de soupape (11) et la tige (12) sont conçus d'une seule pièce.

9. Élément de terminaison de ligne (4) selon l'une des revendications 5 à 8, **caractérisé en ce que** l'espace de réception (7) destiné à l'extrémité libre de la sortie de ventilation (3) comporte des parois périphériques qui comportent des évidements d'encliquetage qui font saillie dans l'espace de réception (7) qui coopèrent avec des évidements d'encliquetage correspondants de la sortie de ventilation.

10. Élément de terminaison de ligne (4) selon l'une des revendications 7 à 9, **caractérisé en ce que** la tige (12) du corps de soupape (10) traverse une ouverture frontale (15) du corps de base (6).

11. Élément de terminaison de ligne (4) selon la revendication 10, **caractérisé en ce que** le corps de base (6) comporte un évidement frontal extérieur qui est conçu un trou borgne (13) et qui comporte un fond (14) dans lequel est ménagé l'ouverture (15) destinée à recevoir l'arbre (12) du corps de soupape (10).

12. Récipient de fluide (5) en matière thermoplastique pour d'au moins une sortie de ventilation, le récipient de fluide comprenant un élément de terminaison de ligne (4) qui est conçu selon l'une des revendications 1 à 11.

13. Réservoir de fluide (5) selon la revendication 12, **caractérisé en ce que** le corps de base (6) est conçu comme un capuchon ou bouchon de fermeture destiné à l'extrémité libre de la sortie de ventilation (3) et est relié de manière amovible à l'extrémité libre de la sortie de ventilation.

14. Réservoir de fluide (5) selon l'une des revendications 12 à 13, **caractérisé en ce que** l'extrémité libre de la sortie de ventilation (3) présente un profil d'insertion et **en ce que** le profil d'insertion est inséré de manière amovible dans un espace de réception (7) du corps de base (6).

15. Récipient de fluide (5) selon la revendication 14, **caractérisé en ce que** le profil d'insertion coopère par complémentarité de formes avec des moyens complémentaires de l'élément de terminaison de ligne (4).

16. Récipient de fluide selon l'une des revendications 12 à 15 comprenant les caractéristiques de l'une des revendications 1 à 11.
